# EUROPEAN PATENT APPLICATION

(11) **EP 4 748 620 A1**
(43) Date of publication of application: **27.05.2026**
(21) Application number: 25210365.0
(22) Date of filing: 22.10.2025
(51) Int. Cl.: B60L 3/00

(54) **IN-VEHICLE CHARGING SYSTEM**

(30) Priority: 20.11.2024 JP 2024202418
(71) Applicant: TOYOTA JIDOSHA KABUSHIKI KAISHA, Toyota-shi, Aichi-ken 471-8571 (JP)
(72) Inventor: KIDA, Masatoshi, Aichi-ken, 471 8571 (JP)
(74) Representative: D Young & Co LLP

(57) **Abstract**

An in-vehicle charging system (40) is a system that charges a drive battery (30) for storing power for traveling of an electrically powered vehicle (1), and includes a charger (34) that charges the drive battery using power from an EVSE (300), a communication ECU (140) that communicates with the EVSE, and a charging control ECU (110) that controls the charger. The charging control ECU sets a start time of reserved charging using the power from the EVSE (step S114), and controls the charger to start the reserved charging to the drive battery in response to a start notification from the EVSE when the start time is reached (step S121, step S122). When the start notification is not provided, and a predetermined time related to the start time is reached, the communication ECU transmits information for stopping the reserved charging to the EVSE (step S121, step S131, step S135).

## Description

### CROSS REFERENCE TO RELATED APPLICATIONS

This nonprovisional application is based on Japanese Patent Application No. 2024-202418 filed on November 20, 2024 with the Japan Patent Office, the entire contents of which are hereby incorporated by reference.

### BACKGROUND

### Field

The present disclosure relates to an in-vehicle charging system, and in particular, to an in-vehicle charging system that charges a power storage device for storing power for traveling of a vehicle.

### Description of the Background Art

Conventionally, there has been known a technique of mounting a timer on an electrically powered vehicle and performing reserved charging using the timer (see, for example, Japanese Patent Laying-Open No. 2023-95102). According to such a technique, when a current time measured by the timer reaches a reserved time of the reserved charging, the electrically powered vehicle is activated from a vehicular power feeding facility such as a charging stand, and the reserved charging is started.

### SUMMARY

However, there may be a case where the reserved charging is not started even when the reserved time is reached, due to a problem resulting from the vehicular power feeding facility, such as a time lag inside the vehicular power feeding facility, or an error in obtaining time from the outside due to a communication abnormality or the like. In such a case, even when there is a problem resulting from the vehicular power feeding facility, it is required for the electrically powered vehicle to appropriately determine whether or not charging can be performed, and proceed with processing.

The present disclosure has been made to solve the aforementioned problem, and an object thereof is to provide an in-vehicle charging system capable of appropriately determining whether or not charging can be performed and proceeding with processing, even when there is a problem resulting from a vehicular power feeding facility.

An in-vehicle charging system according to the present disclosure is a system that charges a power storage device for storing power for traveling of a vehicle, and includes a charger that charges the power storage device using power from a vehicular power feeding facility, a communication unit that communicates with the vehicular power feeding facility, and a charging control unit that controls the charger. The charging control unit sets a start time of reserved charging using the power from the vehicular power feeding facility, and controls the charger to start the reserved charging to the power storage device in response to a start notification from the vehicular power feeding facility when the start time is reached. When the start notification is not provided, and a predetermined time related to the start time is reached, the communication unit transmits information for stopping the reserved charging to the vehicular power feeding facility.

With such a configuration, when the notification to start the reserved charging from the vehicular power feeding facility to the vehicle at the start time of the reserved charging is not provided, and the predetermined time related to the start time is reached, the information for stopping the reserved charging is transmitted to the vehicular power feeding facility. As a result, it is possible to provide an in-vehicle charging system capable of appropriately determining whether or not charging can be performed and proceeding with processing, even when there is a problem resulting from a vehicular power feeding facility.

The predetermined time may be a time identical to the start time. With such a configuration, when the notification to start the reserved charging from the vehicular power feeding facility to the vehicle at the start time of the reserved charging is not provided, and the start time is reached, the information for stopping the reserved charging is transmitted to the vehicular power feeding facility. As a result, even when there is a problem resulting from the vehicular power feeding facility, it is possible to appropriately determine whether or not charging can be performed, and proceed with processing.

The predetermined time may be a time obtained by adding an addition time period to the start time. With such a configuration, when the notification to start the reserved charging from the vehicular power feeding facility to the vehicle at the start time of the reserved charging is not provided, and the time obtained by adding the addition time period to the start time is reached, the information for stopping the reserved charging is transmitted to the vehicular power feeding facility. As a result, even when there is a problem resulting from the vehicular power feeding facility, it is possible to appropriately determine whether or not charging can be performed, and proceed with processing.

The charging control unit may measure a time period to reach the predetermined time, by a timer. With such a configuration, the time period to reach the predetermined time can be appropriately measured.

After the information for stopping the reserved charging is transmitted, the charging control unit may control the charger to start charging from the vehicular power feeding facility to the power storage device.

With such a configuration, even when there is a problem resulting from the vehicular power feeding facility, it is possible to appropriately determine whether or not charging can be performed, and further proceed with processing.

The in-vehicle charging system may further include a communication device that communicates with a server and a communication terminal external thereto. When the start notification is not provided, and the predetermined time is reached, the communication device may inquire of the communication terminal of a user of the vehicle whether to perform immediate charging, and, on condition that a response indicating to perform the immediate charging is provided from the communication terminal, the communication unit may transmit the information for stopping the reserved charging, and thereafter transmits to perform the immediate charging to the vehicular power feeding facility.

With such a configuration, even when there is a problem resulting from the vehicular power feeding facility, it is possible to appropriately determine whether or not charging can be performed, and further proceed with processing.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram schematically showing an overall configuration of an electrically powered vehicle according to the present embodiment.
Fig. 2 is a flowchart showing a flow of charging processing performed by an electrically powered vehicle 1 in a first embodiment.
Fig. 3 is a flowchart showing a flow of charging processing performed by electrically powered vehicle 1 in a second embodiment.

### DESCRIPTION OF THE PREFERRED EMBODIMENTS

Hereinafter, embodiments of the present disclosure will be described in detail with reference to the drawings. It should be noted that the same or corresponding parts in the drawings will be designated by the same reference numerals, and the description thereof will not be repeated.

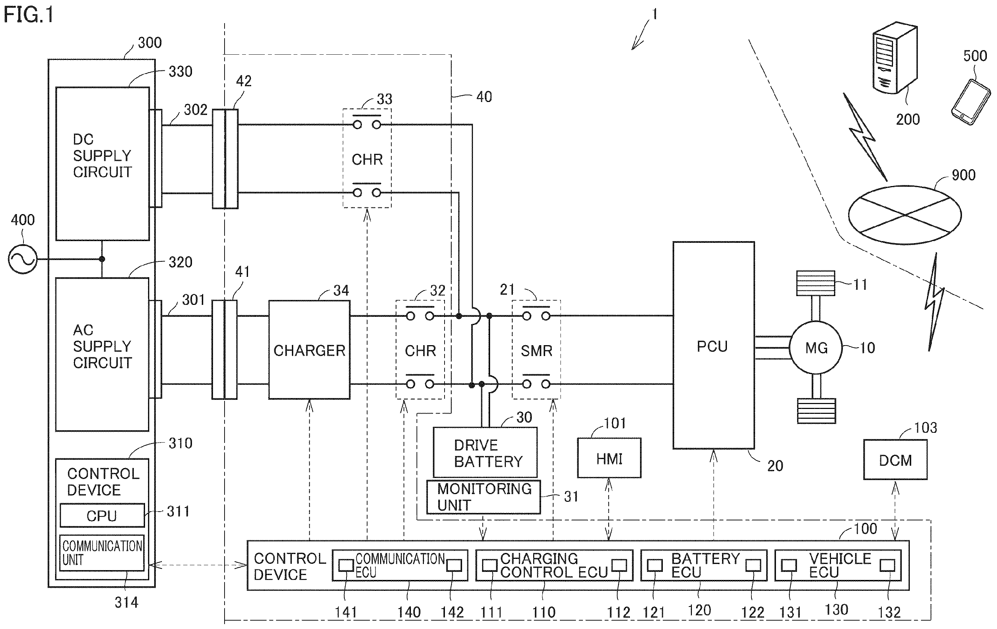

Fig. 1 is a diagram schematically showing an overall configuration of an electrically powered vehicle 1 according to the present embodiment. Fig. 1 shows a situation where electrically powered vehicle 1 and a vehicular power feeding facility (Electric Vehicle Supply Equipment: EVSE) 300 are electrically connected by charging cables 301 and 302. EVSE 300 includes a control device 310. EVSE 300 selectively includes an alternating current (AC) supply circuit 320 and a direct current (DC) supply circuit 330. Control device 310 includes a central processing unit (CPU) 311 and a communication unit 314.

EVSE 300 may be an ordinary charger installed in an ordinary home, for example. In this case, EVSE 300 includes AC supply circuit 320. AC supply circuit 320 is controlled by control device 310, and outputs AC power supplied from a system power supply 400, which is an external power supply, to electrically powered vehicle 1 through charging cable 301. In this case, EVSE 300 does not include charging cable 302 and DC supply circuit 330 for supplying DC power.

EVSE 300 may be a quick charger installed in a charging stand or the like at a location to which electrically powered vehicle 1 travels. In this case, EVSE 300 includes DC supply circuit 330. DC supply circuit 330 is controlled by control device 310, and converts the AC power of system power supply 400, which is an external power supply, into DC power and outputs the DC power to electrically powered vehicle 1 via charging cable 302. In this case, EVSE 300 may also have an ordinary charging function by means of AC supply circuit 320 and charging cable 301, in addition to a quick charging function by means of DC supply circuit 330 and charging cable 302. It should be noted that, when electrically powered vehicle 1 is externally charged, one of charging cable 301 and charging cable 302 is connected to electrically powered vehicle 1.

In addition to the ordinary charging function, AC supply circuit 320 of EVSE 300 may have a reverse power flow function of supplying AC power supplied from electrically powered vehicle 1 via charging cable 301 to system power supply 400. In addition to the quick charging function, DC supply circuit 330 of EVSE 300 may have a reverse power flow function of converting DC power supplied from electrically powered vehicle 1 via charging cable 302 into AC power and supplying the AC power to system power supply 400.

In the present embodiment, electrically powered vehicle 1 is an electric vehicle (Battery Electric Vehicle: BEV). However, electrically powered vehicle 1 may be an externally chargeable plug-in hybrid vehicle (Plug-in Hybrid Electric Vehicle: PHEV) including an internal combustion engine, or may be a fuel cell vehicle (Fuel Cell Electric Vehicle: FCEV) that is externally chargeable and can feed power to the outside. Electrically powered vehicle 1 includes a motor generator 10, drive wheels 11, a power control device (Power Control Unit: PCU) 20, a system main relay (SMR) 21, a drive battery 30, charging relays 32 and 33, a charger 34, inlets 41 and 42, and a control device 100. An in-vehicle charging system 40 includes charger 34, charging relays 32 and 33, inlets 41 and 42, and control device 100 (a charging control ECU 110, a communication ECU 140).

Control device 100 includes charging control electronic control unit (ECU) 110, a battery ECU 120, a vehicle ECU 130, and communication ECU 140. Charging control ECU 110, battery ECU 120, vehicle ECU 130, and communication ECU 140 include processors 111, 121, 131, and 141, and memories 112, 122, 132, and 142, respectively.

Motor generator 10 is a three-phase AC rotating electric machine, for example. Motor generator 10 rotationally drives drive wheels 11 using power from drive battery 30. Further, motor generator 10 can also generate power by regenerative braking. AC power generated by motor generator 10 is converted into DC power by PCU 20, and the DC power is charged in drive battery 30.

PCU 20 converts the DC power stored in drive battery 30 into AC power and supplies the AC power to motor generator 10, in response to a control signal from vehicle ECU 130 of control device 100. Further, PCU 20 converts the AC power generated by motor generator 10 into DC power and supplies the DC power to drive battery 30, in response to a control signal from vehicle ECU 130.

SMR 21 is electrically connected to a power line connecting PCU 20 and drive battery 30. SMR 21 switches between supply and cut-off of power between PCU 20 and drive battery 30, in response to a control signal from vehicle ECU 130 of control device 100.

Drive battery 30 is a DC power supply configured to be chargeable and dischargeable. In the present embodiment, drive battery 30 is a battery assembly including battery cells (unit cells) electrically connected in series, and is a high-voltage battery. Each battery cell may be a lithium ion secondary battery, a nickel-hydrogen battery, or an all-solid-state battery, for example. A monitoring unit 31 detects a voltage, input/output currents, a temperature, and the like of drive battery 30 (the battery cells), and outputs them to battery ECU 120 of control device 100.

When charging cable 301 is connected to inlet 41, inlet 41 receives the AC power supplied from EVSE 300. Charging relay 32 is electrically connected to a power line connecting drive battery 30 and charger 34. Charging relay 32 switches between supply and cut-off of power between drive battery 30 and charger 34, in response to a control signal from charging control ECU 110 of control device 100.

Charger 34 is configured to include an AC/DC converter, for example, and converts the AC power supplied via charging cable 301 and inlet 41 into DC power and outputs the DC power to charging relay 32. When electrically powered vehicle 1 (drive battery 30) is externally charged using the power supplied from inlet 41 (ordinary charging), charging control ECU 110 closes charging relay 32, and transmits a control signal to charger 34 to control supplied power to be supplied to electrically powered vehicle 1.

When charging cable 302 is connected to inlet 42, inlet 42 receives the DC power supplied from EVSE 300. Charging relay 33 is electrically connected to a power line connecting drive battery 30 and inlet 42. Charging relay 33 switches between supply and cut-off of power between drive battery 30 and inlet 42, in response to a control signal from charging control ECU 110 of control device 100. When electrically powered vehicle 1 (drive battery 30) is externally charged using the power supplied from inlet 42 (quick charging), charging control ECU 110 closes charging relay 33, and transmits a control signal for controlling supplied power to be supplied to electrically powered vehicle 1, to control device 310 for EVSE 300.

A human machine interface (HMI) 101 is configured to receive an operation by a driver and to inform the driver of the state of electrically powered vehicle 1 and the like, and may be a touch panel display, for example.

A data communication module (DCM) 103 is an interface for wirelessly communicating with external devices such as a server 200 and a communication terminal 500 via a communication network 900.

Communication ECU 140 communicates with HMI 101, DCM 103, and communication unit 314 of control device 310 for EVSE 300, by controller area network (CAN), for example. Further, communication ECU 140 controls DCM 103 to perform wireless communication with server 200 and communication terminal 500 via communication network 900. Server 200 can communicate with a plurality of electrically powered vehicles 1 and a plurality of EVSEs 300 via communication network 900, and updates information such as a charging history of each electrically powered vehicle 1, information of each EVSE 300, and the like as needed, and stores such information. The charging history of each electrically powered vehicle 1 is stored in association with a position where charging has been performed (EVSE 300).

It is conceivable to mount a timer on electrically powered vehicle 1 described above and perform reserved charging using the timer. For example, it is conceivable that, when a current time measured by the timer reaches a reserved time of the reserved charging, the electrically powered vehicle is activated from a vehicular power feeding facility such as a charging stand, and the reserved charging is started. However, there may be a case where the reserved charging is not started even when the reserved time is reached, due to a problem resulting from EVSE 300, such as a time lag inside EVSE 300, or an error in obtaining time from the outside due to a communication abnormality or the like. In such a case, even when there is a problem resulting from EVSE 300, it is required for electrically powered vehicle 1 to appropriately determine whether or not charging can be performed, and proceed with processing.

Thus, charging control ECU 110 sets a start time of the reserved charging using the power from EVSE 300, and controls charger 34 to start the reserved charging to drive battery 30 in response to a start notification from EVSE 300 when the start time is reached. When the start notification is not provided, and a predetermined time related to the start time is reached, communication ECU 140 transmits information for stopping the reserved charging to EVSE 300.

Thereby, when the notification to start the reserved charging from EVSE 300 to electrically powered vehicle 1 at the start time of the reserved charging is not provided, and the predetermined time related to the start time is reached, the information for stopping the reserved charging is transmitted to EVSE 300. As a result, even when there is a problem resulting from EVSE 300, it is possible to appropriately determine whether or not charging can be performed, and proceed with processing.

### [First Embodiment]

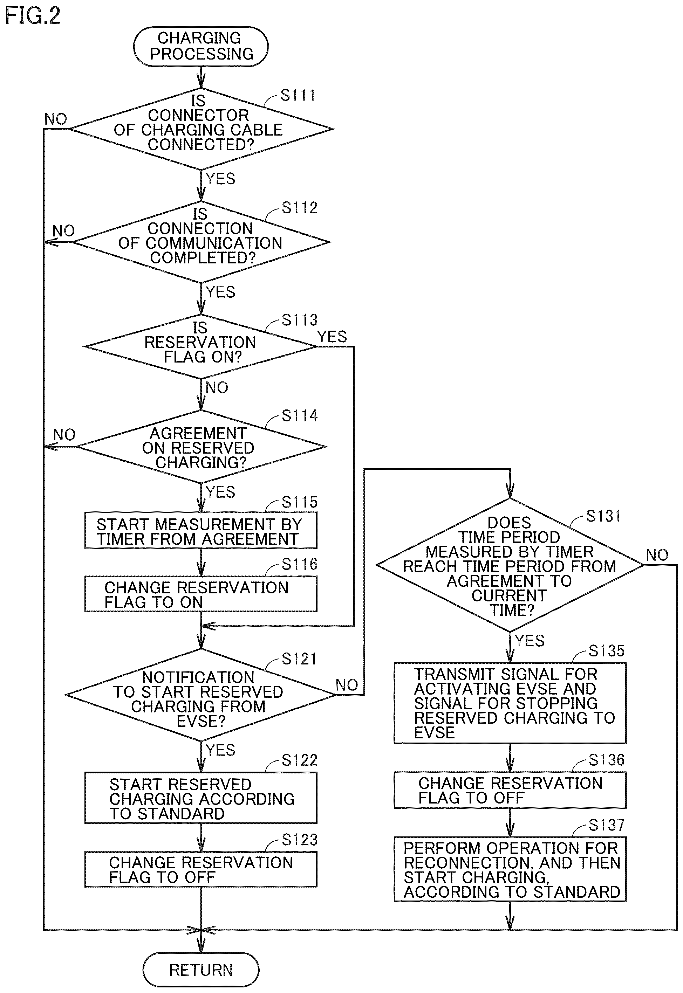

Fig. 2 is a flowchart showing a flow of charging processing performed by electrically powered vehicle 1 in a first embodiment. Referring to Fig. 2, the charging processing is called from higher-order processing for each predetermined cycle and is performed by charging control ECU 110 of control device 100 for electrically powered vehicle 1.

First, processor 111 of charging control ECU 110 determines whether or not a connector of charging cable 301 or 302 of EVSE 300 is connected to inlet 41 or 42 (step S111). When processor 111 determines that the connector of charging cable 301 or 302 is not connected (NO in step S111), processor 111 returns the processing to be performed to the higher-order processing from which the charging processing was called.

On the other hand, when processor 111 determines that the connector of charging cable 301 or 302 is connected (YES in step S111), processor 111 determines whether or not connection of communication between communication ECU 140 and communication unit 314 of control device 310 for EVSE 300 is completed (step S112). When processor 111 determines that the connection of communication is not completed (NO in step S112), processor 111 returns the processing to be performed to the higher-order processing from which the charging processing was called.

On the other hand, when processor 111 determines that the connection of communication is completed (YES in step S112), processor 111 determines whether or not a reservation flag is ON, the reservation flag indicating that a reservation for performing reserved charging between electrically powered vehicle 1 and EVSE 300 is completed (step S113).

When processor 111 determines that the reservation flag is not ON (NO in step S113), processor 111 determines whether or not processing for an agreement on the reserved charging between electrically powered vehicle 1 and EVSE 300 is performed (step S114). Based on the agreement on the reserved charging, processor 111 sets a start time of the reserved charging using the power from EVSE 300, in memory 112. Further, CPU 311 of control device 310 for EVSE 300 also sets the start time of the reserved charging to electrically powered vehicle 1, in a memory. When processor 111 determines that the processing for the agreement on the reserved charging is not performed (NO in step S114), processor 111 returns the processing to be performed to the higher-order processing from which the charging processing was called.

Processor 111 of charging control ECU 110 has a function of a timer. When processor 111 determines that the processing for the agreement on the reserved charging is performed (YES in step S114), processor 111 uses the function of the timer to start measurement by the timer from the agreement on the reserved charging (step S115). Then, processor 111 changes the reservation flag to ON (step S116).

CPU 311 of control device 310 for EVSE 300 has a function of a real-time clock. In EVSE 300, CPU 311 uses the function of the real-time clock to determine whether or not the start time of the reserved charging agreed between EVSE 300 and electrically powered vehicle 1 is reached. When CPU 311 determines that the start time of the reserved charging is reached, CPU 311 controls communication unit 314 to transmit a notification indicating to start the reserved charging, to communication ECU 140 of electrically powered vehicle 1.

In electrically powered vehicle 1, when processor 111 of charging control ECU 110 determines that the reservation flag is ON (YES in step S113), or after step S 116, processor 111 determines whether or not the notification indicating to start the reserved charging is provided from EVSE 300 to communication ECU 140 (step S121). When processor 111 determines that the notification to start the reserved charging is provided (YES in step S121), processor 111 cooperates with EVSE 300 to start the reserved charging, according to a charging standard such as GB/T27930.2, for example (step S122). Thereafter, processor 111 changes the reservation flag to OFF (step S123), and returns the processing to be performed to the processing from which the charging processing was called.

On the other hand, when processor 111 determines that the notification to start the reserved charging is not provided (NO in step S121), processor 111 determines whether or not a time period measured by the timer from step S115 reaches a time period from a time of the agreement on the reserved charging to a current time (step S131). It should be noted that processor 111 may determine whether or not the time period measured by the timer reaches a time period obtained by adding an additional time period (for example, a time period such as 5 minutes or 10 minutes) to the time period from the time of the agreement on the reserved charging to the current time. When processor 111 determines that the time period measured by the timer does not reach the time period from the time of the agreement on the reserved charging to the current time (NO in step S131), processor 111 returns the processing to be performed to the higher-order processing from which the charging processing was called.

On the other hand, when processor 111 determines that the time period measured by the timer reaches the time period from the time of the agreement on the reserved charging to the current time (YES in step S131), processor 111 controls communication ECU 140 to transmit a signal for activating EVSE 300 and a signal indicating to stop the reserved charging, to communication unit 314 of EVSE 300 (step S135). Then, processor 111 changes the reservation flag to OFF (step S136).

Subsequently, processor 111 performs an operation for reconnection with EVSE 300, and then cooperates with EVSE 300 to start charging, according to a charging standard such as GB/T27930.2, for example (step S137). Thereafter, processor 111 returns the processing to be performed to the processing from which the charging processing was called.

### [Second Embodiment]

In the first embodiment, as shown in steps S131 to S137 in Fig. 2, when the reserved charging is not started from EVSE 300 even when the start time of the reserved charging is reached, charging is started from the side of electrically powered vehicle 1, without particularly asking a user of electrically powered vehicle 1 for confirmation. In a second embodiment, when the reserved charging is not started from EVSE 300 even when the start time of the reserved charging is reached, charging is started from the side of electrically powered vehicle 1 after the intention of the user is confirmed.

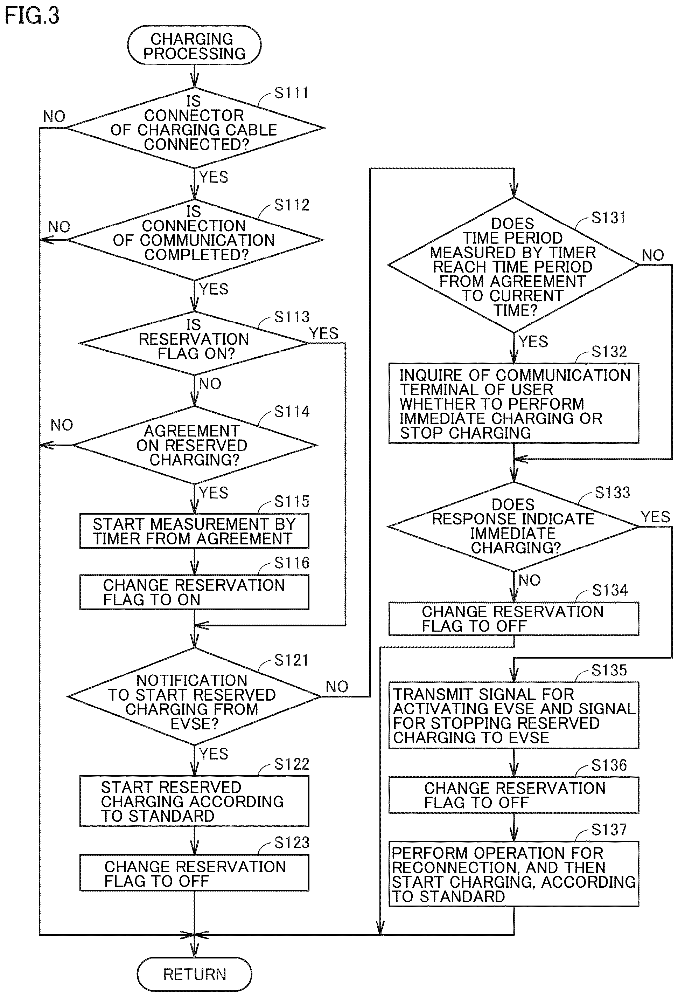

Fig. 3 is a flowchart showing a flow of charging processing performed by electrically powered vehicle 1 in the second embodiment. Referring to Fig. 3, the charging processing is called from higher-order processing for each predetermined cycle and is performed by charging control ECU 110 of control device 100 for electrically powered vehicle 1. In Fig. 3, the description of the same parts as those in Fig. 2 will not be repeated.

When processor 111 determines that the time period measured by the timer reaches the time period from the time of the agreement on the reserved charging to the current time (YES in step S131), processor 111 controls communication ECU 140 to inquire of communication terminal 500 of the user of electrically powered vehicle 1, via DCM 103 and communication network 900, whether to start immediate charging or stop charging (step S132).

When processor 111 determines that the time period measured by the timer does not reach the time period from the time of the agreement on the reserved charging to the current time (NO in step S131), or after step S132, processor 111 determines whether or not a response received by communication ECU 140 from communication terminal 500 of the user, via communication network 900 and DCM 103, indicates to start the immediate charging (step S133). When processor 111 determines that the response does not indicate to start the immediate charging (NO in step S133), processor 111 changes the reservation flag to OFF (step S134), and returns the processing to be performed to the higher-order processing from which the charging processing was called.

On the other hand, when processor 111 determines that the response indicates to start the immediate charging (YES in step S133), processor 111 performs the processing from steps S135 to S137 described in Fig. 2.

### [Modifications]

(1) In the embodiments described above, as shown in step S115 in Figs. 2 and 3, the time period from the agreement on the reserved charging is measured by a count-up timer. However, the present disclosure is not limited thereto, and the time period may be measured by another method. For example, the time period from the time of the agreement on the reserved charging to the reserved time may be counted down.
(2) In the embodiments described above, as shown in step S115 in Figs. 2 and 3, measurement of the time period from the agreement on the reserved charging is started. However, the present disclosure is not limited thereto, and measurement may be started from another timing. For example, as shown in steps S115 and S116, measurement may be started immediately before the reservation flag is changed to ON in step S116 or immediately after the reservation flag is changed to ON in step S116, or may be started when the connector of charging cable 301 or 302 is connected or when communication between electrically powered vehicle 1 and EVSE 300 is started.
(3) In the embodiments described above, as shown in step S131 in Figs. 2 and 3, processor 111 of charging control ECU 110 of control device 100 determines whether or not the time period measured by the timer reaches the time period from the time of the agreement on the reserved charging to the current time.
   However, the present disclosure is not limited thereto, and in a case where the time period from the time of the agreement on the reserved charging to the reserved time is counted down as described above, processor 111 of charging control ECU 110 may determine whether or not the counted down time period reaches 0. Further, processor 111 of charging control ECU 110 may have a function of a real-time clock, and processor 111 may determine whether or not the current time reaches the start time of the reserved charging.
(4) In the embodiments described above, as shown in step S131 in Figs. 2 and 3, processor 111 of charging control ECU 110 determines whether or not the time period measured by the timer reaches the time period from the time of the agreement on the reserved charging to the current time. However, the present disclosure is not limited thereto, and processor 111 of charging control ECU 110 may determine whether or not the time period measured by the timer reaches a time period obtained by adding an additional time period (for example, a time period such as 5 minutes or 10 minutes) to the time period from the time of the agreement on the reserved charging to the current time.
(5) In the embodiments described above, as shown in step S135 in Figs. 2 and 3, the signal for stopping the reserved charging is transmitted to EVSE 300. However, the present disclosure is not limited thereto, and information indicating to stop the reserved charging may be transmitted to communication terminal 500 of the user of electrically powered vehicle 1 instead of EVSE 300, or may be transmitted to communication terminal 500 of the user of electrically powered vehicle 1 in addition to EVSE 300.
(6) In the embodiments described above, as shown in steps S135 to S137 in Figs. 2 and 3, charging is started again after EVSE 300 receives the signal for stopping the reserved charging from electrically powered vehicle 1. However, the present disclosure is not limited thereto, and charging may be stopped when EVSE 300 receives the signal for stopping the reserved charging from electrically powered vehicle 1, or whether to stop charging or perform immediate charging may be switched based on whether or not EVSE 300 receives the signal for stopping the reserved charging.
(7) In the embodiments described above, as shown in step S114 in Figs. 2 and 3, the reserved charging is established in response to the agreement between charging control ECU 110 of electrically powered vehicle 1 and control device 310 for EVSE 300. However, the present disclosure is not limited thereto, and the reserved charging may be established in response to an instruction from one of electrically powered vehicle 1 and EVSE 300. In this case, the one that provides the instruction sets a start time in the memory and transmits the start time to the other one that receives the instruction, and the other one that receives the instruction sets the transmitted start time in the memory.

### [Summary]

(1) As shown in Fig. 1, in-vehicle charging system 40 is a system that charges drive battery 30 for storing power for traveling of electrically powered vehicle 1, and includes charger 34 that charges drive battery 30 using power from EVSE 300, a communication unit (for example, communication ECU 140) that communicates with EVSE 300, and a charging control unit (for example, charging control ECU 110) that controls charger 34. As shown in Figs. 2 and 3, the charging control unit sets a start time of reserved charging using the power from EVSE 300 (for example, step S114), and controls the charger to start the reserved charging to drive battery 30 in response to a start notification from EVSE 300 when the start time is reached (for example, step S121, step S122). When the start notification is not provided, and a predetermined time related to the start time is reached, the communication unit transmits information for stopping the reserved charging to EVSE 300 (for example, step S121, step S131, step S135).
   Thereby, when the notification to start the reserved charging from EVSE 300 to electrically powered vehicle 1 at the start time of the reserved charging is not provided, and the predetermined time related to the start time is reached, the information for stopping the reserved charging is transmitted to EVSE 300. As a result, even when there is a problem resulting from EVSE 300, it is possible to appropriately determine whether or not charging can be performed, and proceed with processing.
(2) As shown in steps S115 and S131 in Figs. 2 and 3, the predetermined time may be a time identical to the start time. Thereby, when the notification to start the reserved charging from EVSE 300 to electrically powered vehicle 1 at the start time of the reserved charging is not provided, and the start time is reached, the information for stopping the reserved charging is transmitted to EVSE 300. As a result, even when there is a problem resulting from EVSE 300, it is possible to appropriately determine whether or not charging can be performed, and proceed with processing.
(3) As shown in step S131 in Fig. 2 and the modification, the predetermined time may be a time obtained by adding an addition time period to the start time. Thereby, when the notification to start the reserved charging from EVSE 300 to electrically powered vehicle 1 at the start time of the reserved charging is not provided, and the time obtained by adding the addition time period to the start time is reached, the information for stopping the reserved charging is transmitted to EVSE 300. As a result, even when there is a problem resulting from EVSE 300, it is possible to appropriately determine whether or not charging can be performed, and proceed with processing.
(4) As shown in steps S115 and S131 in Figs. 2 and 3, the charging control unit may measure a time period to reach the predetermined time, by a timer. Thereby, the time period to reach the predetermined time can be appropriately measured.
(5) As shown in step S137 in Figs. 2 and 3, after the information for stopping the reserved charging is transmitted, the charging control unit may control charger 34 to start charging from EVSE 300 to drive battery 30.
   Thereby, even when there is a problem resulting from EVSE 300, it is possible to appropriately determine whether or not charging can be performed, and further proceed with processing.
(6) As shown in Fig. 1, in-vehicle charging system 40 further includes a communication device (for example, DCM 103) that communicates with server 200 and communication terminal 500 external thereto. As shown in steps S131 to S137 in Fig. 3, when the start notification is not provided, and the predetermined time is reached, the charging control unit may inquire of communication terminal 500 of a user of electrically powered vehicle 1 whether to perform immediate charging, and, on condition that a response indicating to perform the immediate charging is provided from communication terminal 500, the communication unit may transmit the information for stopping the reserved charging, and thereafter transmit to perform the immediate charging to EVSE 300.

Thereby, even when there is a problem resulting from EVSE 300, it is possible to appropriately determine whether or not charging can be performed, and further proceed with processing.

Although the embodiments of the present disclosure have been described, it should be understood that the embodiments disclosed herein are illustrative and non-restrictive in every respect. The scope of the present disclosure is defined by the scope of the claims, and is intended to include any modifications within the scope and meaning equivalent to the scope of the claims.

## Claims

1. An in-vehicle charging system (40) that charges a power storage device (30) for storing power for traveling of a vehicle (1), the in-vehicle charging system comprising:
a charger (34) that charges the power storage device using power from a vehicular power feeding facility (300);
a communication unit (140) that communicates with the vehicular power feeding facility; and
a charging control unit (110) that controls the charger, wherein
the charging control unit
sets a start time of reserved charging using the power from the vehicular power feeding facility (S114), and
controls the charger to start the reserved charging to the power storage device in response to a start notification from the vehicular power feeding facility when the start time is reached (S121, S122), and
when the start notification is not provided, and a predetermined time related to the start time is reached, the communication unit transmits information for stopping the reserved charging to the vehicular power feeding facility (S121, S131, S135).

2. The in-vehicle charging system according to claim 1, wherein the predetermined time is a time identical to the start time (S115, S131).

3. The in-vehicle charging system according to claim 1, wherein the predetermined time is a time obtained by adding an addition time period to the start time.

4. The in-vehicle charging system according to claim 1, wherein the charging control unit measures a time period to reach the predetermined time, by a timer (S115, S131).

5. The in-vehicle charging system according to claim 1, wherein, after the information for stopping the reserved charging is transmitted, the charging control unit controls the charger to start charging from the vehicular power feeding facility to the power storage device (S137).

6. The in-vehicle charging system according to claim 1, further comprising a communication device (103) that communicates with a server (200) and a communication terminal (500) external thereto, wherein
when the start notification is not provided, and the predetermined time is reached, the communication device inquires of the communication terminal of a user of the vehicle whether to perform immediate charging (S131, S132), and
on condition that a response indicating to perform the immediate charging is provided from the communication terminal, the communication unit transmits the information for stopping the reserved charging, and thereafter transmits to perform the immediate charging to the vehicular power feeding facility (S135, S137).
